(19) Europäisches Patentamt
European Patent Office
Office européen des brevets

(11) **EP 2 165 296 B1**

(12) **EUROPÄISCHE PATENTSCHRIFT**

(45) Veröffentlichungstag und Bekanntmachung des Hinweises auf die Patenterteilung:
**15.08.2012 Patentblatt 2012/33**

(51) Int Cl.:
*G06N 7/00* (2006.01)     *G06N 3/00* (2006.01)
*G05B 13/04* (2006.01)

(21) Anmeldenummer: **08761311.3**

(22) Anmeldetag: **23.06.2008**

(86) Internationale Anmeldenummer:
**PCT/EP2008/057978**

(87) Internationale Veröffentlichungsnummer:
**WO 2009/000816 (31.12.2008 Gazette 2009/01)**

(54) **VERFAHREN UND VORRICHTUNG ZUR RECHNERGESTÜTZTEN VORHERSAGE VON INTENDIERTEN BEWEGUNGEN**

METHOD AND DEVICE FOR COMPUTER-AIDED PREDICTION OF INTENDED MOVEMENTS

PROCÉDÉ ET DISPOSITIF DE PRÉDICTION ASSISTÉE PAR CALCUL DE DÉPLACEMENTS INTENTIONNELS

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **22.06.2007 DE 102007028861**

(43) Veröffentlichungstag der Anmeldung:
**24.03.2010 Patentblatt 2010/12**

(73) Patentinhaber: **Albert-Ludwigs-Universität Freiburg**
**79085 Freiburg (DE)**

(72) Erfinder:
• **RICKERT, Jörn**
**79540 Lörrach (DE)**
• **MEHRING, Carsten**
**79104 Freiburg (DE)**
• **BLUMBERG, Julie**
**79104 Freiburg (DE)**
• **BRAUN, Daniel**
**77652 Offenburg (DE)**
• **MILEKOVIC, Tomislav**
**79110 Freiburg (DE)**
• **FISCHER, Jörg**
**79312 Emmendingen (DE)**

(74) Vertreter: **Schneider, Günther Martin et al**
**Bettinger Schneider Schramm**
**Patent- und Rechtsanwälte**
**Postfach 86 02 67**
**81629 München (DE)**

(56) Entgegenhaltungen:
WO-A-2007/096269     US-A1- 2003 023 319
US-A1- 2004 073 414     US-A1- 2007 022 068

• PARRA L C ET AL: "Response Error Correction - A Demonstration of Improved Human-Machine Performance Using Real-Time EEG Monitoring" IEEE TRANSACTIONS ON NEURAL SYSTEMS AND REHABILITATIONENGINEERING, IEEE SERVICE CENTER, NEW YORK, NY, US, Bd. 11, Nr. 2, 1. Juni 2003 (2003-06-01), Seiten 173-177, XP002432478 ISSN: 1534-4320
• WEISHUI WAN: "Implementing Online Natural Gradient Learning: Problems and Solutions" IEEE TRANSACTIONS ON NEURAL NETWORKS, [Online] Bd. 10, Nr. 2, März 2006 (2006-03), Seiten 317-329, XP002493086 Gefunden im Internet: URL:http://dx.doi.org/10.1109/TNN.2005.863 406> [gefunden am 2008-08-21]
• PRADEEP SHENOY ET AL: "Towards adaptive classification for BCI" JOURNAL OF NEURAL ENGINEERING, [Online] Bd. 3, 1. März 2006 (2006-03-01), Seiten R13-R23, XP002493087 IOP Publishing Ltd, UK Gefunden im Internet: URL: http://stacks.iop.org/JNE/3/R13> [gefunden am 2008-08-21]

- **ALI BASHASHATI ET AL: "A survey of signal processing algorithms in brain?computer interfaces based on electrical brain signals" JOURNAL OF NEURAL ENGINEERINGJ. NEURAL ENG, [Online] Bd. 4, Nr. 2, 27. März 2007 (2007-03-27), Seiten R32-R57, XP002493088 IOP Publishing Ltd, UK Gefunden im Internet: URL: http://dx.doi.org/10.1088/1741-2560/4/ 2/R03> [gefunden am 2008-08-21]**

- **JULIE BLUMBERG ET AL: "Adaptive Classification for Brain Computer Interfaces" ENGINEERING IN MEDICINE AND BIOLOGY SOCIETY, 2007. EMBS 2007. 29TH ANN UAL INTERNATIONAL CONFERENCE OF THE IEEE, IEEE, PI, 1. August 2007 (2007-08-01), Seiten 2536-2539, XP031150002 ISBN: 978-1-4244-0787-3**

**Beschreibung**

Die Erfindung betrifft ein Verfahren und eine Vorrichtung zur rechnergestützten Vorhersage von intendierten Bewegungen, wie sie in Brain-Machine-Interfaces (BMI) zum Einsatz kommen.

Hintergrund

BMIs sind eine weltweit in der Entwicklung befindliche Technologie, welche die direkte Ansteuerung von Prothesen oder technischen Geräten durch Aktivität des Gehirns eines Probanden ermöglicht. Die grundsätzliche Aufgabe eines Motor-BMI, aus neuronaler Aktivität die intendierte Bewegung vorherzusagen, wird klassisch durch Kalibrierten eines Vorhersagemodells in einer Lernphase und anschließende Anwendung des Vorhersagemodells auf eine virtuelle oder reelle Bewegung in einer Betriebsphase zu lösen versucht.

Tatsächlich ist aber die Grundannahme dieser Herangehensweise verletzt, nämlich dass die neuronale Aktivität zwischen Trainings- und Betriebsphase bzw. innerhalb der Betriebsphase stationär wäre. Die neuronale Aktivität ist im Gegenteil selbst auf vergleichsweise kleinen Zeitskalen dynamisch. Nicht abschließende Gründe dafür können die Plastizität des Gehirns (Neuverschaltung, Erfahrung, Alterung, ...), der kognitive Zustand (Aufmerksamkeit, Motivation, Müdigkeit, Tageszeit, Veränderung durch Parallelaktivität, ...), Unterschiede zwischen dem Trainings- und dem Betriebsszenario (vorgestellte gegenüber ausgeführter Bewegung) oder Variabilität der Ableitung (kleine Bewegungen der Elektroden, Änderung der Dielektrizität des Gels (durch Verhärtung), mit dem EEG-Elektroden angebracht sind, Sterben von Neuronen bei Einzelzellableitung, ...) sein.

Eine präzise und langzeitstabile Vorhersage zur Rekonstruktion bewusster Gedanken aus den (in praxi elektrischen) Signalen des Gehirns in einem BMI sollte mit dieser Dynamik umgehen können.

Zur praktischen Umsetzung der Ableitung der neuronalen Aktivität wird eine flexible Folie verwendet, die dicht gepackt mit Miniaturelektrodenkontakten belegt ist, auf der Oberfläche ausgewählter Areale des Cortex cerebri (-Großhirnrinde) implantiert. Die zwischen den Elektroden gemessenen elektrischen Felder, resultierend aus der Aktivität von Gruppen von Nervenzellen (neuronale Populations-Aktivität), werden in einen Mehrkanalverstärker eingespeist. Der Verstärker verarbeitet die neuronalen Signale der einzelnen Elektroden mit hoher zeitlicher Auflösung und übergibt sie in Echtzeit an ein computergestütztes System zur Signalverarbeitung. Dieses System berechnet aus den Nervensignalen die Handlungsintention des Patienten für bestimmte, trainierte Willkürbewegungen, die vom Patienten nicht mehr selbst ausgeführt werden können. Die berechnete Bewegungsintention wird dann in ein Steuersignal umgesetzt, beispielsweise für eine Armprothese oder einen Computercursor.

US 2004/0073414 A1 betrifft ein Verfahren mit den Merkmalen des Oberbegriffs von Anspruch 1. Para, et al: "Response error correction - a demonstration of improved human-machine performance using real-time EEG monitoring", IEEE transactions on neural systems and rehabilitation engineering, IEEE service centre, New York, NY, US, Band 11 Nr. 2, 1. Juni 2003, Seiten 173 bis 177 betrifft die Fehlerkorrektur in einer Mensch-Maschine-Schnittstelle, die einen Satz adaptiver linearer Vorverarbeitungs- und Klassifizierungsalgorithmen für die Detekrion von "error related negativity" verwendet.

Aufgabe der Erfindung

Vor diesem Hintergrund ist Aufgabe der Erfindung, ein Verfahren zum Vorhersagen von Bewegungen gemäß dem Oberbegriff von Anspruch 1 bereitzustellen, das sich während des Betriebs verlässlicher auf die Dynamik der neuronalen Aktivität einstellen kann, sowie eine entsprechende Vorrichtung.

Beschreibung der Erfindung

Diese Aufgabe wird durch das Verfahren bzw. die Vorrichtung gemäß den unabhängigen Ansprüche gelöst. Vorteilhafte Weiterbildungen der Erfindung sind in den abhängigen Ansprüchen definiert.

In weiterer Ausgestaltung der Erfindung wird die Abbildung in Abhängigkeit von der Zeit zusätzlich durch ein erfasstes neuronales Fehlersignal aktualisiert.

Die Abbildung kann in Abhängigkeit von der Zeit zusätzlich zu den neuronalen Signalen von Zuständen des Probanden abhängen, wobei Zustände insbesondere Körperhaltung oder Aufmerksamkeit sind.

Die Abbildung kann die Wahrscheinlichkeit neuronaler Signale für die möglichen intendierten Bewegungen beschreiben, wobei in das zumindest eine Modell eine Adaption des neuronalen Signals eingeht, die vor dem Aktualisierungsschritt umfasst:

einen Schritt, in dem die aktuellen Wahrscheinlichkeiten, mit welchen ein aktuell erfasstes neuronales Signal den jeweiligen möglichen Bewegungen entspricht, geschätzt werden.

Die Aktualisierung der Abbildung kann durch ein Regressionsverfahren oder durch ein Klassifikationsverfahren erfolgen.

Die Grundidee der Erfindung ist, das Vorhersagemodell im Betrieb zu adaptieren, um die Dynamik der neuronalen Aktivität auszugleichen.

In weitere Ausgestaltung der Erfindung wird zusätzlich ein Fehlersignal (error signal) erfasst und in die Adaptation einbezogen. Damit kommt als weiterer Parameter die Genauigkeit des Fehlersignals ins Spiel.

In weiterer Ausgestaltung der Erfindung sind zwei Arten von Vorhersagemodellen zu unterscheiden, die als "Klassifizierung" und als "Regression" bezeichnet werden. Klassifikation bedeutet, einen Aktivitätsvektor einer bestimmten diskreten Klasse zuzuordnen ("rechts"-"links"), Regression dagegen die Bestimmung einer kontinuierlichen Variablen. Das verwendete Verfahren ist die Diskriminantenanalyse für die Klassifikation und Kalman-Filter für die Regression.

Die Erfinder konnten nun zeigen, dass die Vorhersagekraft einer adaptiven linearen Diskriminantenanalyse (ALDA) deutlich gesteigert werden kann, wenn das Fehlersignal (error signal) berücksichtigt wird.

Das Kalman-Filter andererseits versucht, die Wahrscheinlichkeitsverteilung der intendierten Bewegung iterativ aus den vorhergehenden neuronalen Aktivitätsdaten zu schätzen, und lässt dabei aufgrund der Iteration auch die bisherige Bewegung einfließen. Es "springt" also nicht, sondern nimmt einigermaßen kontinuierliche Bewegungen an. Das Modell ist zunächst linear und doppelt gaußisch, nimmt also Normalverteilungen sowohl für das Rauschen der abgeleiteten Aktivitätsdaten wie der vorherzusagenden Wahrscheinlichkeitsverteilung der Bewegung an.

Um "unsupervised learning" zu implementieren, wird als eine weitere Ausgestaltung der Erfindung ein sog. "augmented state space" eingeführt, der neben den Bewegungen auch das Tuning, also die bewegungsselektive Aktivitätsfunktion der Neuronen, beinhaltet. Dieses Tuning, bzw. die zugehörigen Tuningparameter werden von dem entsprechend erweiterten Vorhersagemodell also mit umfasst, worin gerade die Adaptivität des Verfahrens liegt.

Um dies mathematisch fassen zu können, wird das Kalman-Filter auf nichtlineare Fälle erweitert, wie es unter dem Begriff "extended" Kalman-Filter bekannt ist. Algorithmisch handhabbar ist eine Erweiterung namens "unscented" Kalman-Filter.

Varianten der Erfindung betreffen ferner folgende Ausgestaltungen:

Es kann ein nichtlineares neuronales Modell verwendet werden, z.B. mittels des Unscented-Kalman-Filters.

Es können weitere zusätzliche Modelle neben dem Bewegungsmodell F (Zustands- und Umgebungsmodell) genutzt werden.

Das Fehlersignal kann zum optimierten Aktualisieren der Tuningparameter genutzt werden. Im einfachsten Fall: War die Vorhersage X(t) falsch und es trat danach ein neuronales Fehlersignal auf, wird die Aktualisierung der Tuningparameter (im neuronalen Modell p(X|Y)(t)) rückgängig gemacht: p(X|Y)(t) wird zurückgesetzt auf p(X|Y)(t-1). Findet eine Aktualisierung häufiger statt, als die Geschwindigkeit mit der Fehlersignale auftreten, können auch mehrere Aktualisierungen rückgängig gemacht werden. In einem erweiterten Fall, bei dem die Schwere des Fehlers im Fehlersignal enthalten ist, kann die Aktualisierung nicht nur rückgängig gemacht werden, sondern neu und in umgekehrter Richtung vollzogen werden.

Es sei darauf hingewiesen, dass das Vorhersagemodell grundsätzlich unabhängig von der technischen Art der Ableitung der Gehirnaktivität (z.B. EEG, ECoG, LFP, SUA) ist. Es sind Verfahren bevorzugt, die das Hirngewebe intakt lassen, daher die Verwendung von EEG oder bekannter flacher EcoG-Elektroden. Demgemäß stellen die "neuronalen" Signale Y und E (elektronisch verarbeitbare) Formen der entsprechenden abgeleiteten Gehirnaktivität dar und liegen außerhalb des menschlichen Körpers vor. Die neuronalen Signale Y und E enthalten also die Information der abgeleiteten Gehirnaktivität, sind jedoch nicht die Gehirnaktivität selbst. Es sei verstanden, dass der Vorgang des Ableitens der Gehirnaktivität aus dem menschlichen Körper nicht Bestandteil der vorliegenden Erfindung ist, vielmehr sich die Erfindung auf die Verarbeitung von Signalen außerhalb des menschlichen Körpers bezieht.

Ausführungsbeispiel

Die Erfindung wird anhand der Zeichnung näher beschrieben.

Es zeigen:

Fig. 1a      ein Verfahren zur rechnergestützten Vorhersage von intendierten Bewegungen gemäß dem Stand der Technik;

Fig. 1b, c      zwei Varianten des erfinderischen Verfahrens zur rechnergestützten Vorhersage von intendierten Bewegungen;

Fig. 2-4      weitere Varianten des erfinderischen Verfahrens zur rechnergestützten Vorhersage von intendierten Bewegungen;

Fig. 5      das Dekodiervermögen (Performance) eines BMI mit Kalman-Filter ohne Adaption gemäß dem Stand der Technik;

Fig. 6      das Dekodiervermögen (Performance) eines BMI mit Kalman-Filter mit Adaption gemäß der Erfindung;

Fig. 7 und 8   Gegenüberstellungen des Dekodiervermögens verschiedener Verfahren.

Die erfindungsgemäßen Verfahren und Vorrichtungen lassen sich in einem BMI zur Ausführung bringen, welches eingangsseitig Signale erhält, welche die Nervenaktivität eines Probanden repräsentieren. Hierzu misst eine auf der Himoberfläche des Probanden implantierte dünne Folie mit typischerweise 32 Elektrodenkontakten die Nervenaktivität eines motorischen Areals. Die 32 Elektroden übergeben die Spannungsunterschiede zwischen den 32 Elektroden und einer Referenzelektrode über ein drahtloses Übertragungssystem und einen Verstärker an ein Computersystem. Die Erfassung des Signals auf der Hirnoberfläche des Probanden und die Weiterleitung des Signals an das Computersystem ist nicht Teil der Erfindung.

Die Spannungsunterschiede über die Zeit t bilden (pro Elektrode) eine rauschbehaftete Kurve, also ein kontinuierliches Signal. Dieses Signal enthält sowohl tiefe (<10 Hertz), als auch mittlere und hohe (>60 Hertz) Frequenzanteile. Die Signale zweier Elektroden ähneln sich umso mehr, je näher die Elektroden beieinander sind, vor allem in ihren niederfrequenten Komponenten.

Die informationstragenden Komponenten von Y sind dann über definierte Zeitabstände gemittelte (bspw. 50ms) Amplituden und Phasen ausgewählter Frequenzbänder. z.B. Amplitude und Phase im 1-5-Hertz-Bereich und Amplitude im 50-150-Hertz-Bereich. Zusätzliche Information ist in den Korrelationen zwischen den Signalen der Elektroden enthalten, und in den tief- oder bandpassgefilterten über definierte Zeitabstände gemitteltem (bspw. 50ms) Rohsignal.

Im Computersystem werden die eingehenden Spannungsunterschiede in kurzen kontinuierlichen Zeitabständen vorverarbeitet und auf die gerade beschriebenen informationstragenden Komponenten reduziert. Aus 32 Spannungsunterschieden mit hoher Zeitauflösung wird so ein auszuwertender Signalvektor Y(t).

In diesem Signalvektor Y(t) steckt also die Information über die intendierte, also vom Probanden vorgestellte Bewegung. Ein Signalvektor Y(t) verändert sich in Abhängigkeit einer bestimmten intendierten Bewegung z.B. wie folgt. Bei einer (gedachten) Bewegung nach links erhöht das Signal einer der Elektroden seine Amplitude im 50-150-Hz-Band im Mittel um 25%, bei einer Bewegung nach rechts im Mittel nur um 10%. Weil die gemessene Amplitude im Einzeldurchgang stark um diese Mittelwerte schwankt, werden oft probabilistische Modelle verwendet: Diese sagen aus, mit welcher Wahrscheinlichkeit, in diesem Fall eine gemessene Amplitude, einer bestimmten Bewegung zuzuordnen ist. Diese Schwankungen der gemessenen Werte - trotz gleicher gedachter Bewegung - können durch viele Elektroden und zeitliche Mittellungen kompensiert werden.

Typisch für neuronale Signale ist, dass sich die Signalverläufe (bei gleichen intendierten Bewegungen) mit der Zeit ändern. Zu einem späteren Zeitpunkt erhöht sich besagte Amplitude bei einer Bewegung nach links im Mittel nur noch um 20%, und bei einer Bewegung nach rechts nur noch um 5%. Dies muss bei der Ermittlung der Bewegung berücksichtigt werden, damit die Steuerung noch genauso gut funktioniert wie zuvor. Hierbei sind sowohl langsame, kontinuierliche Änderungen bekannt, als auch sprunghafte.

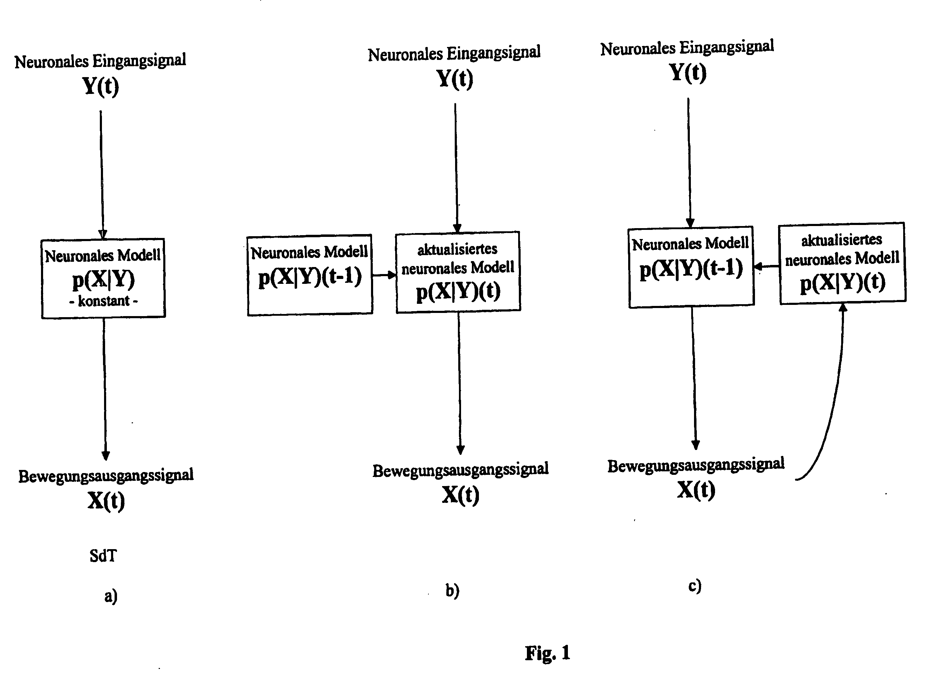

Fig. 1a illustriert ein Verfahren zur rechnergestützten Vorhersage von intendierten Bewegungen X aus neuronalen Signalen Y des Gehirns eines Probanden gemäß dem Stand der Technik, bei dem das eine neuronale Modell während des Betriebs konstant ist.

Aus einem neuronalen Signal Y(t) am Eingang des Brain-Machine-Interface (BMI) soll mittels des Modells p(X|Y), welches die Wahrscheinlichkeiten der Bewegungen X, gegeben die neuronalen Aktivitäten Y beschreibt, die intendierte Bewegung X(t) ermittelt, also dekodiert werden. Das Wahrscheinlichkeitsmodell p(X|Y) ist hierbei eine spezielle Ausgestaltung des allgemeinen Modells H, welches eine Abbildung der Menge der erfassten neuronalen Signale Y auf die Menge der intendierten Bewegungen X beschreibt. Das BMI soll also an seinem Ausgang das Bewegungssignal X(t) liefern. Dieses Bewegungssignal kann zur Ansteuerung der entsprechenden Prothese oder dergleichen dienen.

Fig. 1b, c illustrieren zwei Varianten des erfinderischen Verfahrens zur rechnergestützten Vorhersage von intendierten Bewegungen X aus neuronalen Signalen Y des Gehirns eines Probanden mit automatisierter Adaption W des Modells im Betrieb über die Zeit t. Bei der Variante gemäß Fig. 1b erfolgt die Adaption W des Modells p(X|Y)(t-1) in jedem Lernzyklus jeweils vor der Dekodierung der aktuell intendierten Bewegung X(t), so dass die intendierte Bewegung X(t) mit dem bereits adaptierten Modell berechnet wird p(X|Y)(t). Bei der Variante gemäß Fig. 1c wird in jedem Zyklus zunächst die intendierte Bewegung X(t) aus dem neuronalen Signal Y(t) ermittelt, und zwar auf Basis des Modells p(X|Y)(t-1) aus dem vorherigen Lernzyklus, bevor die Adaption W des Modells zu p(X|Y)(t) erfolgt.

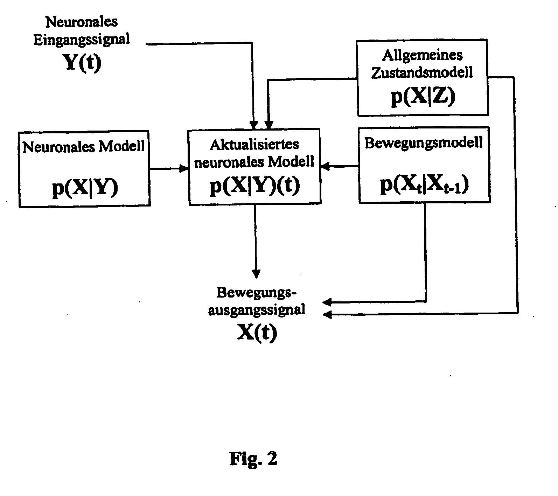

Erfindungsgemäß können mehrere Vorhersage-Modelle (für X(t)) gleichzeitig zum Einsatz kommen. Fig. 2 illustriert einen derartigen Fall, bei dem zusätzlich zu dem neuronalen Modell zwei weitere Modelle hinzukommen, nämlich ein Zustandsmodell p(X|Z) und ein Bewegungsmodell $p(X_t| X_{t-1})$.

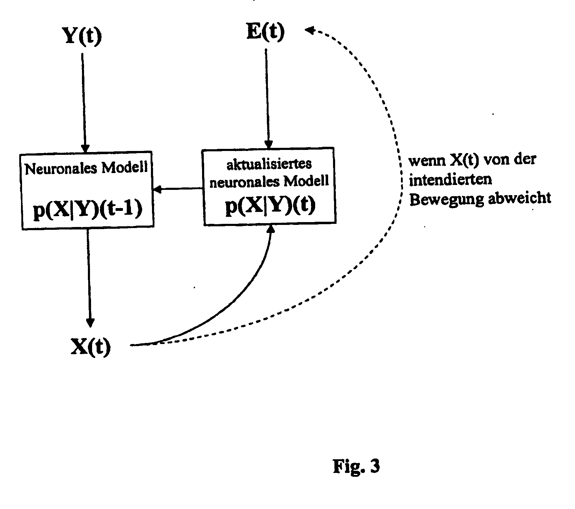

Fig. 3 illustriert eine weitere Variante des erfinderischen Verfahrens zur rechnergestützten Vorhersage von intendierten Bewegungen X aus neuronalen Signalen Y des Gehirns eines Probanden mit automatisierter Adaption W des Modells im Betrieb über die Zeit t, und zwar unter Verwendung eines Fehlersignals E(t), das im Gehirn des Probanden ausgelöst wird, wenn die ermittelte Bewegung nicht mit der vom Probanden intendierten Bewegung übereinstimmt. Hier wird das neuronale Modell p(X|Y)(t-1) jeweils unter Verwendung des erfassten Fehlersignals E(t) zu p(X|Y)(t) aktualisiert. Auch hier kann die Adaption jeweils vor oder nach der Dekodierung erfolgen, auch wenn die Fig. 3 lediglich den Fall der Adaption nach der Dekodierung zeigt.

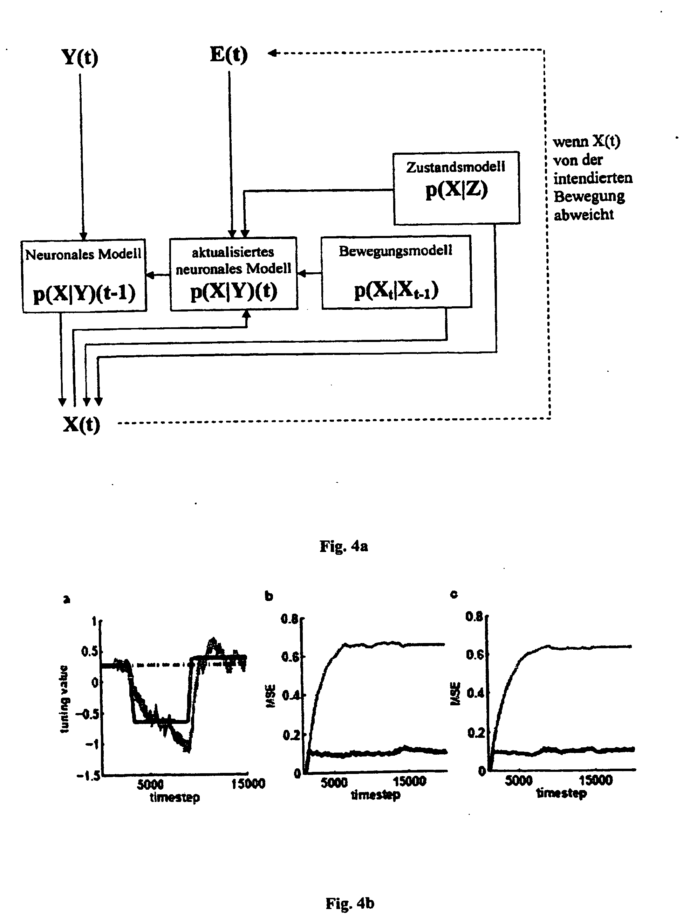

Fig. 4a illustriert eine Kombination der Varianten gemäß Fig. 2 und 3, also ein Verfahren zur rechnergestützten Vorhersage von intendierten Bewegungen X aus neuronalen Signalen Y des Gehirns eines Probanden mit zusätzlichen Modellen und automatisierter Adaption W und unter Verwendung des Fehlersignals E(t). Hier wird das neuronale Modell p(X|Y)(t-1) jeweils unter Verwendung des erfassten Fehlersignals E(t) zu p(X|Y)(t) aktualisiert. Des Weiteren gehen ein Zustandsmodell p(X|Z) und ein Bewegungsmodell $p(X_t| X_{t-1})$ sowohl in die Bewegungsvorhersage X(t) ein, als auch in die Adaptation des neuronalen Modells. Auch hier kann die Adaption jeweils vor oder nach der Dekodierung erfolgen, auch wenn die Fig. 4a wiederum lediglich den Fall der Adaption nach der Dekodierung zeigt.

Eine typische Anwendung eines BMIs mit Erfassung und Auswertung eines Fehlersignals ist die Dekodierung von Armbewegungen aus Elektroenzephalogramm- oder Elektrocorticogrammdaten. Diese werden dem BMI aus Messungen der Gehirnaktivität als elektrische Signale Y(t) zur Verfügung gestellt.

Die Kalibrierung von BMIs findet in der Regel unter im Labor festgelegten Bedingungen (unter Beaufsichtigung) statt. Der Benutzer stellt sich dort wiederholt von außen vorgegebene Bewegungen vor. Die dabei aufgezeichneten Gehirnsignale Y(t) ergeben bei jedem Durchlauf ein Trainingsbeispiel (X, Y), das Gehirnsignale Y mit einer Bewegungsabsicht X in Verbindung bringt. Aus einer Menge von Trainingsbeispielen wird die Abbildung H (also das neuronale Modell) gelernt. Weil sich die Gehirnsignale sich im Laufe der Zeit ändern, müssen nichtadaptive BMIs in regelmäßigen Abständen - unter Beaufsichtigung - neu kalibriert werden.

Gemäß der Erfindung wird dieses Neukalibrieren dadurch umgangen, dass eine unbeaufsichtigte, kontinuierliche Anpassung der Abbildung H mittels neuronalen Fehlersignalen vorgenommen wird. Diese Fehlersignale enthalten Informationen, ob und wie gut die dekodierte Bewegung der tatsächlichen Bewegungsabsicht entspricht.

Das Fehlersignal wird verwendet für

- die unbeaufsichtigten Erzeugung von Trainingsbeispielen,

- die Auswahl von geeigneten Trainingsbeispielen und

- die Erzeugung einer neuen Dekodierfunktion H'.

Das Ergebnis ist eine informierte Suche im Raum aller möglichen Dekodierfunktionen, was eine deutliche Beschleunigung der Anpassung zur Folge hat.

Informationsgehalt des Fehlersignals

Neuronale Fehlersignale sind neuronale Korrelate dafür, wie gut eine Bewegungsabsicht von einem BMI dekodiert wurde. Der Informationsgehalt des dekodierten Fehlersignals kann binär oder kontinuierlich sein. Dieser Informationsgehalt entscheidet über die Art der Anpassung des BMIs und damit über dessen Anpassungsgeschwindigkeit. Im ersten Fall wird aus den Gehirnsignalen des Benutzers ein binäres Fehlersignal dekodiert. Dieses Fehlersignal sagt lediglich aus, ob eine Dekodierung (X, Y) falsch *(E= false)* oder korrekt (E=true) war. Hier wird von der Annahme ausgegangen, dass eine Dekodierung (X, Y) falsch ist, wenn die dekodierte Bewegungsabsicht X und die tatsächliche Bewegungsabsicht X um mehr als einen festen Schwellenwert $\varepsilon$ bezüglich eines Fehlermaßes $\delta$ unterscheiden.

Beispiel

Das BMI dekodiert zweidimensionale Geschwindigkeitsrichtungen X= (v_x, v_v). Es wird eine konstante Geschwindigkeit angenommen, z.B. |X|=1. Als Fehlermaß $\delta$ wird der Winkel zwischen der dekodierten Bewegungsrichtung X und der tatsächlich beabsichtigten Bewegungsrichtung $\hat{X}$ verwendet. Jedes mal, wenn der Winkelfehler größer als z. B. $\varepsilon =15°$ ist, wird ein Fehlersignal E ausgelöst. Dieses Fehlersignal ist binär.

Ein binäres Fehlersignal enthält weniger Information als das nun beschriebene kontinuierliche Fehlersignal. Ein kontinuierliches Fehlersignal enthält eine graduelle Angabe, wie falsch oder korrekt ein (X, Y)-Paar ist. Ohne Beschränkung der Allgemeinheit kann dies durch einen Wert $e = IR_0^+$ ausgedrückt werden. Je kleiner $e$, desto korrekter war die Dekodierung (X, Y). Der kleinste Wert für $e$ ist 0, was bedeutet, dass die dekodierte Bewegungsabsicht mit der tatsächlichen übereinstimmt.

Beispiel

Wenn unter den gleichen Randbedingungen wie im vorigen Beispiel ein kontinuierliches Fehlersignal verwendet wird, dann wird $e$ größer mit zunehmendem Winkelfehler.

Erzeugung von Trainingsbeispielen

1m beaufsichtigten Lernen werden Trainingsbeispiele vorgegeben, d.h. es ist bekannt, was die beabsichtigte Bewegung $\hat{X}$ zu einem Gehirnsignal Y ist. Diese Information ist im hier vorliegenden Fall nicht gegeben.

Das in diesem Abschnitt beschriebene Verfahren erzeugt aus (X, Y, E)-Tripeln Trainingsbeispiele ($\tilde{X}$, Y, E), die für die Auswahl und bei der automatischen Erzeugung einer neuen Dekodierfunktion H' verwendet werden.

Wenn ein binäres Fehlersignal benutzt wird, kann man bei (X, Y)-Paaren, bei denen kein Fehlersignal ausgelöst wurde, von einer korrekten Dekodierung ausgehen. Man wählt in diesem Fall $\tilde{X}$ =X. Wurde ein Fehlersignal $\delta$ ausgelöst, kann man davon ausgehen, dass X und dessen nähere Umgebung bezüglich $\delta$ nicht der beabsichtigten Bewegung entsprechen. Jede andere Richtung ist hat a priori die gleiche Wahrscheinlichkeit, die beabsichtigte Richtung $\hat{X}$ zu sein. Das Auswählen von $\tilde{X}$ kann zufällig erfolgen oder nach einer festen Vorschrift, muss aber die Bedingung $\delta(X, \tilde{X}) > \varepsilon$ erfüllen. $\tilde{X}$ ist vermutlich nicht das richtige $\hat{X}$ , aber ist auf jeden Fall eine bessere Wahl als X.

Beispiel

Sei unter den gleichen Randbedingungen wie im vorigen Beispiel (X, Y, *false*) ein Tripel, bei dem ein Fehlersignal ausgelöst wurde. Als $\tilde{X}$ kann jede Bewegungsrichtung ausgewählt werden, die einen Winkel von mehr als $\varepsilon$ =15° zu X hat. Eine Möglichkeit wäre $\tilde{X}$ = -X.

Im Fall eines kontinuierlichen Fehlersignals vergrößert man die Schwelle $\varepsilon$ mit zunehmenden Fehlersignal E . Ansonsten verfährt man wie im binären Fall.

Auswahl der Trainingsbeispiele

Aus einer Menge von erzeugten Trainingsbeispielen ($\tilde{X}$, Y, E) werden im nächsten Schritt die Beispiele ausgewählt, die zur Erzeugung der neuen Abbildung H' verwendet werden. Nun wird auch ersichtlich, warum das Fehlersignal e zu dem Trainingsbeispielen hinzugefügt wurde: das Fehlersignal wird zur Bewertung der Trainingsbeispiele verwendet. Im Falle eines binären Fehlersignals werden zuerst Trainingsbeispiele genommen, bei denen das Fehlersignal nicht ausgelöst wurde (*E=true*). Der Grund dafür ist, dass diese Trainingsbeispiele mehr Information enthalten als die anderen mit *e=false*.

Beispiel

In dem laufenden Beispiel wurde das Gehirnsignal Y gemessen, gesucht ist nun die Bewegungsrichtung X, die in Y enthalten ist. Die Aussage ((12, 17), *true*) sagt etwas darüber aus, worauf die Abbildung H das Gehirnsignal Y abbilden soll. Dies kann man nicht direkt aus den Aussagen ((34,3), Y, *false*) und ((1, 5) Y, *false*) und ((12, 45), *Y, false*) ableiten.

Bei einem kontinuierlichen Fehlersignal werden die Trainingsbeispiele mit aufsteigendem Fehlersignal sortiert. Trainingsbeispiele mit kleinerem Fehler werden so bevorzugt.

Erzeugung einer neuen Abbildung H als Dekodierfunktion

Sei $r>n$ und {$\tilde{X}_i$, $Y_i$, $E_i$} eine Menge von ausgewählten Trainingsbeispielen mit n als der Dimension von X, also X $\in$ IR". Aus dieser Menge kann mit Hilfe der Methode der kleinsten Quadrate (Least Square Fit) eine Abbildung M berechnet werden, die den Fehler für die Gleichungen $\forall i \in$ 1,2,...$r$ : $Y_i = M\tilde{X}_i$ minimiert.

Ist das neuronale Modell H eine lineare Funktion, kann die neue Abbildung H' nach der Vorschrift *H'= H + $\alpha$* (*H - M*) gebildet werden, wobei $\alpha \in$ *IR* ein Parameter für die Schrittweite der Anpassung ist.

Die Dekodierung der Bewegungsabsichten kann durch Regressionsverfahren z.B. (mittels Kalman-Filter) und durch Klassifikationsverfahren erfolgen. Regressionsverfahren dekodieren kontinuierliche Bewegungsabsichten. Ein Ergebnis sei z.B. (235,-13), was in obigem Beispiel "*bewege den Cursor um 235 Pixel nach rechts und um 13 Pixel nach unten*" bedeutet. Bei Klassifikationsverfahren wird die Bewegungsabsicht mit der Dekodierung auf wenige Klassen, z.B. *hoch, runter, links* und *rechts* abgebildet.

Im Folgenden wird ein Ausführungsbeispiel für ein Regressionsverfahren und ein Ausführungsbeispiel für ein Klassifikationsverfahren beschrieben.

Ausführungsbeispiel Kalman

Eine von den Erfindern erarbeitete und in Computersimulationen erfolgreich getestete Methode ist eine auf in ihrem Bezug zur Bewegung hin veränderliche Gehirnsignale (Adaptation), spezialisierte Variante des Kalman-Filters - oder allgemeiner, des Partikel-Filters. In der folgenden Beschreibung wird als Beispiel die Rekonstruktion einer Armbewegung (X) aus der Gehirnaktivität (Y) verwendet.

Die Verwendung von Kalman-Filtern für neuronale Netzwerke allgemein ist beschrieben in Simon Haykin, "Kalman Filtering and Neural Networks", John Wiley & Sons, New York 2001.

Das Kalman-Filter schätzt die beabsichtigte Armbewegung X(t) aus einer Folge von Messungen neuronaler Signale Y(t), die verrauscht sein können.

Andere Anwendungsbeispiele beziehen sich auf die Rekonstruktion von Gefühlen (z.B. Hunger/Durst, Zuneigung/Abneigung), Sprache oder Bildern. Mathematisch lässt sich dies folgendermaßen beschreiben.

Die neuronalen Signale Y werden beschrieben als eine Funktion H, die abhängig ist von den adaptiven/veränderlichen Tuningparametern W(t) und der Bewegung X(t) plus Rauschen Ny (Neuronales Modell),

$$Y(t) = H(W(t),X(t)) + Ny.$$

Die Bewegung X zum Zeitpunkt t wird beschrieben als Funktion F plus Rauschen Nx,

$$X(t) = F(X(t-1)) + Nx.$$

Die Variablen X(t-1) und X(t) sind jeweils die Bewegung zu den Zeitpunkten t-1 (letzte ermittelte Bewegung) bzw. t (aktuell zu ermittelnde Bewegung). Dier Bewegung X(t) kann aus der vorherigen Bewegung X(t-1) hergeleitet werden, indem die lineare Abbildung F auf X(t-1) angewandt und der Rauschterm Nx hinzugefügt wird. Dies ist das zugrunde gelegte Bewegungsmodell. Im nichtadaptiven Fall wird dies alleinig verwendet. Im adaptiven Fall wird es erweitert (s.u.).

Die Messungen Y(t) und der mit dem Zustandsmodell aus X(t-1) geschätzte Zustand X(t) werden über das Neuronale Modell in Verbindung gebracht: Dieses nimmt den geschätzten Zustand X(t) zur Schätzung des Messwertes Y(t). Eine Schätzung des aktuellen Y(t) ergibt sich also aus dem Zustand X(t), abgebildet z.B. durch eine lineare Abbildung H, und einem Rauschterm Nx(t). Der Trick des Kalman-filters besteht nun darin, die Schätzung des aktuellen Messwertes Y'(t) mit dem tatsächlich gemessenen Y(t) zu vergleichen und, unter Zuhilfenahme der wahrscheinlichsten Bewegung X'(t) entsprechend des Bewegungsmodells, die wahrscheinlichste Bewegung X(t) zu ermitteln. Mathematisch ist dies X(t) = X'(t) + K * (Y(t)-Y'(t)), wobei K der Kalman-Faktor ist. Siehe hierzu ausführlicher das Anwendungsbeispiel: Cursorsteuerung durch eine adaptive Regression weiter unten.

Um die Adaptation zu berücksichtigen, wird nicht nur die Bewegung X(t) geschätzt, sondern X wird hier erweitert um die Tuningparameter W der Funktion H, so dass gilt X_erweitert (t)=[X(t),W(t)]. Weiterhin wird Nx erweitert um das Rauschen der Tuning-Parameter W (Nx wird zu Nx_erweitert = [Nx, Nw], wobei Nx das Rauschen des Bewegungsmodell beschreibt und Nw das Rauschen der neuronalen Tuning-Parameter). Weiterhin wird F erweitert zu F_erweitert = [Fx, Fw], wobei Fx das Bewegungsmodell beschreibt und Fw das Modell der Adaptation der Tuningparameter. Diese Erweiterungen werden auch als "augmented state space" bezeichnet. Eine andere Möglichkeit, die Adaptation zu berücksichtigen, besteht in der Einführung eines zweiten Kalman-Filters, das die Tuningparameter W(t) schätzt. Dieses Filter läuft separat zum ersten Kalman-Filter, der die geschätzten W(t) in seiner Funktion H anwendet.

Im einfachsten Fall bildet die Funktion Fw lediglich die Identität ab. Das heißt, die Parameter W werden nur durch das Rauschen Nx verändert. Der beschriebene Ansatz ist jedoch so ausgelegt, das er für beliebige Modelle, die beschreiben, wie sich die Tuningparameter über die Zeit ändern, funktioniert - wenn das Modell bekannt ist, kann es direkt im Kalman-Filter verwendet werden. Ist es unbekannt, muss es durch ein anderes Modell, einfachsterweise die Identität plus Rauschen, ersetzt werden. Neben der Modellkenntnis Fw ist für ein gutes Funktionieren auch, und bei Unkenntnis von Fw im Besonderen, eine gute Kenntnis von Nw wichtig. Was hilft, wenn Nw unbekannt oder nur ungenau bekannt ist, ist eine schrittweise Anpassung vom Nx_erweitert an eine Neuschätzung dieser Matrix durch eine Robbins-Monroe-Approximation. Diese Methode nimmt an, dass die Kovarianz des Kalman-update-Modells gleich dem aktuellen Modell ist:

$$Nw\_update\ (t) = Kw\ *\ [Y(t)-Y'(t)]\ *\ Kw^{T}\ *\ [Y(t)-Y'(t)]^{T}\ ,$$

wobei Kw der untere rechte Teil des Kalman-Gains ist, der Nw entspricht (Kw = K(i,j) mit i,j = d1+1, d1+2, ..., d1+d2, wobei d1 die Dimensionalität von Nx ist und d2 die von Nw), und Y'(t) die aktuelle Schätzung Y durch das Kalman-Filter (Y'(t)= H(X'(t))). Anstelle nun direkt Nw_update(t) zu verwenden, ist es üblich, das im Kalman-Filter verwendete Nw langsam an das Nw_update anzupassen:

$$Nw(t) = (1-a)\ *\ Nw(t) + a*Nw\_update\ (t),$$

wobei a die Schrittgröße der Anpassung ist, und ausgewählt wird zwischen 0 (keine Anpassung) und 1 (sofortige Anpassung).

Fig. 4b zeigt die Schätzung neuronaler Tuning-Parameter. In der linken Grafik gibt die schwarze Kurve den Wert eines simulierten Tuning-Parameters über der Zeit an. Die graue durchgezogene Kurve gibt die Schätzung dieses Tuning-Parameters zum Dekodieren bei einem adaptiven Kalman-Filter an, während die gestrichte graue Kurve die Schätzung durch ein Kalman-Filter ohne Adaption angibt, die bei der einmal ermittelten Schätzung verbleibt. Die mittlere Abbildung zeigt den mittleren quadratischen Fehler (MSE) zwischen den simulierten TuningParametern und der Schätzung durch die Kalman-Filter während 2D-Bewegungen (2 Tuning-Parameter per Neuron), adaptives Kalman-Filter in schwarz, Kalman-Filter ohne Adaption in grau. Die Daten wurden jeweils für 50 Schritte (timesteps) berechnet und über dann über die 50 Schritte gemittelt. Die rechte Kurve zeigt das Gleiche für 3D-Bewegungen (3 Tuning-Parameter per Neuron). Gut erkennbar ist, dass das Kalman-Filter mit Adaption einen nahezu konstant kleinen Fehler MSE zeigt, während das Kalman-Filter ohne Adaption mit zunehmender Zeit schlechter werdende Schätzungen liefert.

Was weiter sinnvoll ist, um die Genauigkeit des adaptiven Kalman-Filters zu erhöhen, ist, im Betrieb die Schätzung von W(t) auf physiologisch realistische Grenzwerte zu beschränken. Also Maxima und Minima für die einzelnen Werte von W einzuführen, um zu verhindern, dass das adaptive Kalman-Filter bei seiner Schätzung aus einem physiologisch plausiblen Bereich hinausausläuft.

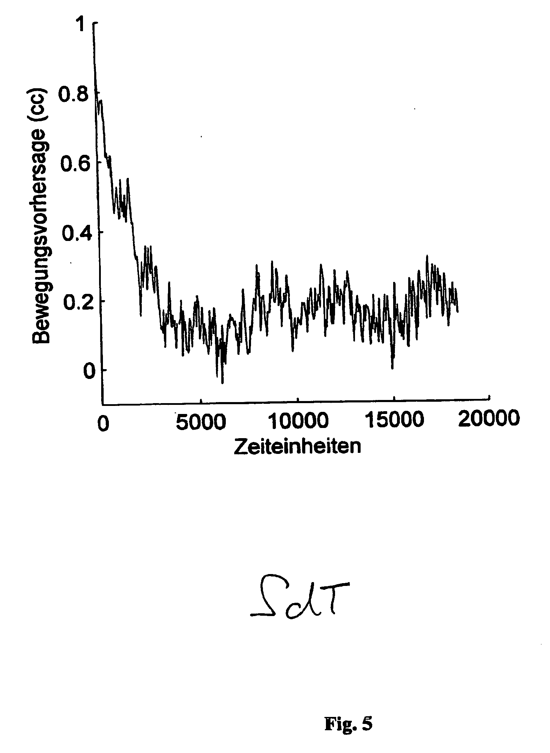

Illustration der Qualität der Schätzungsgenauigkeit des adaptiven Kalman-Filters: Der Kalman-Filter berechnet also unter Zuhilfenahme der Modelle F und H die wahrscheinlichste Bewegung X zu einem Zeitpunkt t, gegeben die gemessenen neuronalen Signale Y. Würden die Parameter W von H nicht berücksichtigt, würde mit fortschreitender Änderung von W, also mit fortschreitender Zeit, H zunehmend ungenauer und damit die Berechnung der Bewegung zunehmend ungenauer werden. Dies sei mit Bezug auf Fig. 5 illustriert.

Die in Fig. 5 dargestellte Kurve zeigt das Mittel über 20 Simulationsdurchläufe (also Trefferwahrscheinlichkeit für die Bewegungsvorhersagen) eines BMI mit Kalman-Filter ohne Adaption (W=0), also gemäß dem Stand der Technik, für zufällige zielgerichtete Bewegungen auf einem 2-dimensionalen Schirm als Bewegungsmodell und einem linearen Positionstuning (dessen Tuningparameter W sich über die Zeit verändern) als neuronales Modell H. Wie ersichtlich, sinkt die Trefferwahrscheinlichkeit mit der Zeit rapide ab.

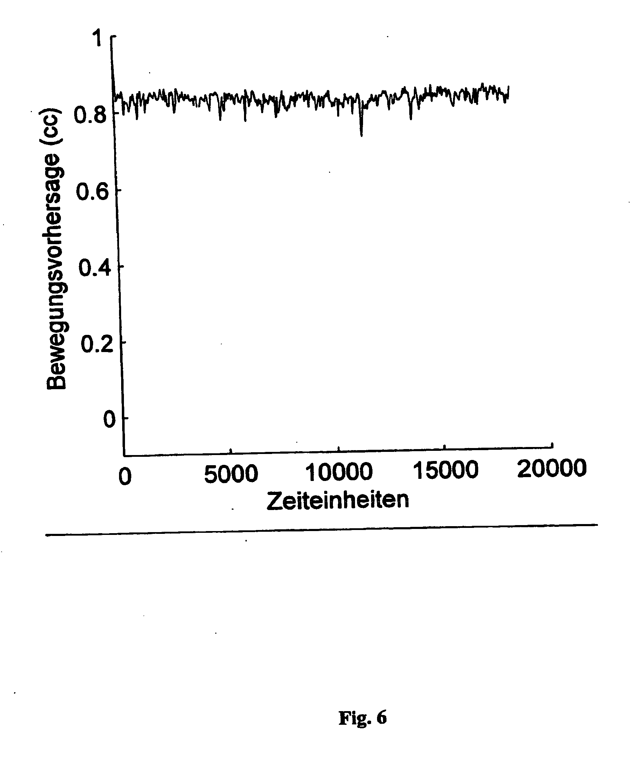

Wird dagegen ein Kalman-Filter gemäß der Erfindung mit Adaption des neuronalen Tuning verwendet, bleibt die Trefferwahrscheinlichkeit (Performance) des BMI konstant hoch. Um also das Wegdriften des Modells zu vermeiden, schätzt das Kalman-Filter neben der Bewegung X zusätzlich die Parameter der Funktion H. Auf diese Art und Weise kann die Methode selbständig auf Veränderungen der Gehirnaktivität reagieren. Es handelt sich um ein selbständiges Lernen ohne jede Hilfe von außen. Fig. 6 zeigt die stabile Performance des BMI mit Kalman-Filter mit Adaption (W = tatsächliche Adaption des neuronalen Tuning) bei sonst gleichen Verhältnissen wie bei der Konstellation gemäß Fig. 5. Wie zu erkennen ist, bleibt die Qualität der Bewegungsvorhersage bei über 0,8 über die Zeit erhalten.

Das adaptive Kalman-Filter mit Auswertung von Fehlersignalen Während der Kalman-Filter arbeitet, werden zu jedem Zeitpunkt t die geschätzten Zustände X(t), die Messwerte Y(t), und optional die Fehlersignale E(t) aufgezeichnet. Mit diesen Trainingsbeispielen kann man ein angepasstes Beobachtungsmodell H' erzeugen. Danach wird getestet, welches der beiden Modelle besser dekodiert.

Bessere Dekodierung bedeutet weniger Fehlersignale pro Iteration. Hierzu wird ein Schwellenwert definiert. In jeder Iteration wird das aktuelle Fehlersignal zu einer Summe s addiert. Bei einem binären Fehlersignal wird im Fehlerfall 1 zu s addiert, 0 sonst. Für ein kontinuierliches Fehlersignal e wird e direkt zu s addiert. Überschreitet die Anzahl der gezählten Fehlersignale den Schwellenwert, wird festgehalten, wie viele Iterationen gebraucht wurden, um dies Schwelle zu überschreiten. Wenn H' länger gebraucht hat, wird H verworfen und H' als neues, angepasstes H im Messmodell verwendet. Ansonsten wird H weiter verwendet. Dieses Vorgehen wird wiederholt, um eine kontinuierliche Anpassung des Kalman-Filters zu erreichen.

In diesem Beispiel sei als Schwellenwert 500 gewählt und das Fehlersignal sei binär. Es werden nun Gehirnsignale Y(t) mittels Kalman-Filter (unter Verwendung von H) dekodiert, bis nach 873 Iterationen des Kalman-Filters 500 Fehlersignale gemessen wurden. Aus den Trainingsbeispielen wird ein Kandidat H' erzeugt. Dann dekodiert das Kalman-Filter mit H' und erreicht nach 1023 Iteration die Schwelle von 500 Fehlersignalen. Da H' weniger Fehler pro Iteration erzeugt als H, wird H verworfen und stattdessen H' verwendet.

Anwendungsbeispiel: Cursorsteuerung durch eine adaptive Regression

Ein schwer gelähmter Patient, der auch seine Sprachmuskulatur nicht mehr nutzen kann, hat gelernt, einen Computercursor über seine Gehirnsignale anzusteuern. Ebenso wie in Anwendungsbeispiel 1 beschrieben wird die Nervenaktivität eines motorischen Areals in Form von Spannungsunterschieden gemessen und an ein Computersystem übertragen. Dort werden die eingehenden Spannungsunterschiede gleich wie in Anwendungsbeispiel 1 vorverarbeitet und in einen Signalvektor Y umgewandelt.

Das Ziel ist es, aus Y die Richtung der Cursorgeschwindigkeit X zu schätzen, z. B. X=(0.2588, 0.9659), was "*bewege den Cursor mit Geschwindigkeit 0.2588 nach rechts und 0.9659 nach oben.*" bedeutet.

Die Schätzung der aktuellen Geschwindigkeitsrichtung X(t) wird von einem Kalman-Filter durchgeführt. Zum Schätzen der Geschwindigkeitsrichtung benötigt das Kalman-Filter ein Neuronales Modell, das die gemessenen Signalvektoren Y mit der Cursorgeschwindigkeit in Zusammenhang bringt, hier wird Y(t) = H(W(t), X(t)) + Ny verwendet. Um von der zuletzt bekannten Geschwindigkeitsrichtung X(t-1) auf die aktuelle Geschwindigkeitsrichtung zu schließen, wird das Bewegungsmodell F (X(t) = F(X(t-1)) + Nx) genutzt). Es bildet den Zustand X(t-1) einen Zeitschritt in die Zukunft und addiert den Rauschterm Nx dazu. Der Rauschterm trägt der Tatsache Rechnung, dass die Vorhersage durch F ungenau sein kann. Je genauer die Vorhersage, desto kleiner ist Nx. Das Bewegungsmessungsmodell verwendet nicht den aktuell gemessenen Signalvektor Y(t) für die Vorhersage. Erst der Kalman-Filter kombiniert beide Modelle zu einer robusten Schätzung von X(t).

Das neuronale Modell H wird aus einem Trainingsdatensatz erzeugt, indem der Benutzer vorgegebene Bewegungsabläufe wiederholt durchführt. In diesem konkreten Fall ist H(W(t), X(t)) eine lineare Abbildung, also eine 2x32 Matrix H = ($h_{i,j}$). Sie bildet die 32 Spannungsunterschiede aus dem Signalvektor Y auf eine zweidimensionale Geschwindigkeitsrichtung ab. Die Berechnung des Neuronalen Modells kann z. B. mit Least Square Fit erfolgen.

Im laufenden Betrieb erfolgt die Schätzung der Geschwindigkeitsrichtung jedes Mal, wenn ein neuer Signalvektor Y(t) gemessen wird. Das Kalman-Filter nimmt die zuletzt geschätzte Geschwindigkeitsrichtung X(t-1) sowie Y(t) und errechnet daraus die aktuelle Geschwindigkeitsrichtung X(t). Dazu errechnet das Kalman-Filter zuerst mit dem Bewegungsmessungsmodell eine a-priori-Schätzung X⁻(t), setzt dann X⁻(t) in das Neuronale Modell ein und erhält so eine a-priori-Schätzung von Y⁻(t). Die a-posteriori-Schätzung X(t) wird mit Hilfe eines Vergleichs von dem tatsächlichen Signalvektor Y(t) und Y'(t) über eine gewichtete Summe gebildet. Gewichtungsfaktor dabei ist der sogenannte "Kalman-Gain". Wird die a-priori Schätzung X⁻(t) als wahrscheinlicher angesehen, d. h. wenn die Unsicherheit bezüglich dem geschätzten X⁻(t) geringer ist als die Unsicherheit der von Y(t) implizierten Bewegungsrichtung, dann geht X⁻(t) stärker in X(t) ein. Ansonsten geht die von Y(t) implizierte Bewegungsrichtung stärker in X(t) ein. Das Neuronale Modell H verliert aufgrund der eingangs beschriebenen Dynamik der neuronalen Aktivität schnell seine Richtigkeit. Die tatsächlichen, dem Computersystem unbekannten Tuningparameter ändern sich, und die Schätzung von X wird zunehmend schlechter. Deshalb müssen die Tuningparameter W des Computersystems adaptiert werden. Eine Möglichkeit dafür ist, neben X(t) zusätzlich parallel W(t) mitzuschätzen.

Das oben beschriebene "augmented" Kalman-Filter erweitert den zu schätzenden Zustand X(t) um die Tuningparameter W(t). Das bedeutet, dass die Tuningparameter vom Kalman-Filter geschätzt werden und zugleich im Neuronalen Modell verwendet werden. In einer einfachen Ausführung entsprechen die Tuning-parameter W(t) den Koeffizienten $h_{i,j}$ von H. Das Bewegungsmessungsmodell dazu wird derart erweitert, dass es die in X(t) enthaltenen Tuningparameter bei der Berechnung der a-priori Schätzung X⁻(t) geringfügig und zufällig modifiziert. Sind die modifizierten Tuningparameter besser geeignet, geht sie stärker in die gewichtete Summe zur Berechnung der a-posteriori-Schätzung X(t) ein.

Eine andere Möglichkeit ist, W(t) über fehlersignalgesteuerte Adaption zu schätzen. Die dabei aufgezeichneten Fehlersignale E sind jetzt zugleich ein Maß für die Qualität der Tuningparameter $W_{alt}$. Entsprechen die Tuningparameter W(t) den Koeffizienten $h_{i,j}$, kann z.B. wie folgt verfahren werden: Wenn $W_{alt}$ mehr als $\gamma$ = 500 Fehlersignale ausgelöst hat, wird die Zeitspanne $\tau_{alt}$ festgehalten, die $W_{alt}$ benötigt hat, diese 500 Fehlersignale auszulösen. Um neue Tuningparameter $W_{neu}$ zu erzeugen, werden die aufgezeichneten (X(t), Y(t), E(t)) Tripel zuerst in Trainingsbeispiele umgewandelt. Wenn das Fehlersignal eines Tripels eine falsche Schätzung von X(t) anzeigt, dann wird daraus das Trainingsbeispiel (-X(t), Y(t), E(t)) erzeugt. Bei einer richtigen Schätzung wird das Tripel unverändert als Trainingsbeispiel verwendet. Danach werden alle Trainingsbeispiele verwendet, um mittels Least Square Fit die Tuningparameter $W_{neu}$ zu berechnen. Anschließend wird $W_{neu}$ zur Dekodierung im Neuronalen Modell verwendet. Es gilt, nun herauszufinden,

ob $W_{neu}$ besser dekodiert als $W_{alt}$. Wieder werden X(t), Y(t) und E(t) aufgezeichnet sowie der Zeitpunkt $\tau_{neu}$ bestimmt, an dem die Fehlersignalschwelle $\gamma$ überschritten wird. Wenn $\tau_{neu} > t_{alt}$ ist, wird $W_{neu}$ beibehalten, d. h. $W_{neu}$ ersetzt $W_{alt}$. Der Vorgang der Adaptation wird während des gesamten Betriebs des BMI fortgeführt.

Bei der Kombination der Adaptation von W(t) mit einem "augmented" Kalman-Filter und fehlersignalgesteuerter Adaptation finden die zwei Anpassungsvorgänge zeitlich verzahnt statt. In jedem Zeitschritt, also bei jeder Schätzung von X(t), adaptiert der "augmented" Kalman-Filter W(t) um ein kleines Stück. Treten dennoch Fehlersignale auf, erzeugt die fehlersignalgesteuerte Adaptation in größeren Zeitabständen entsprechend korrigierte Tuningparameter $W_{neu}$.

Als zweites Ausführungsbeispiel wird ein Vorhersagemodell beschrieben, welches eine adaptive Klassifikation unter Verwendung des Fehlersignals umfasst. Die hier zum Einsatz kommende Klassifikation ist die Lineare Diskriminantenanalyse (LDA). Ein linearer Klassifizierer erzeugt eine Hyperebene, welche den Signalraum in einzelne Unterräume für die einzelnen Klassen aufteilt. Im binären Fall, lautet z.B. die Entscheidungsregel, dass ein gegebener Signalvektor (Y) der Klasse (Bewegung) $X_1$ und nicht der Klasse (Bewegung) $X_2$ angehört:

$$p(X_1 \mid Y) > p(X_2 \mid Y)$$

Die Wahrscheinlichkeiten können gemäß den Bayesschen Regeln wie folgt ermittelt werden:

$$p(X_k \mid Y) = \frac{p(X_k)p(Y \mid X_k)}{p(Y)}$$

mit $p(X_k)$ als der Wahrscheinlichkeit für Klasse k und $p(Y \mid X_k)$ als Klassenverteilung. Unter der Annahme, dass alle Klassen a priori gleichwahrscheinlich sind, $p(c\_k) = const$, reduziert sich die Berechung der obigen Entscheidungsregel zu:

$$p(Y \mid X_1) > p(Y, X_2)$$

Im Fall der LDA wird eine multivariate Gaußsche Verteilung angenommen:

$$p(Y \mid X_k) = \frac{1}{\sqrt{(2\pi)^f \det(C)}} \exp(-\frac{1}{2}(Y - \mu_k)^T C^{-1}(Y - \mu_k))$$

worin Y der zu klassifizierende Vektor (also das neuronale Signal) ist, f die Dimension des neuronalen Signals Y, C die Kovarianzmatrix für alle Klassen (also Bewegungen), $\mu_k$ der Mittelwert der k-ten Klasse (Bewegung) ist.

Die adaptive LDA (ALDA) funktioniert wie folgt. Unter Verwendung von Daten aus einer überwachten Lernphase (z.B. LDA) werden die Anfangsdatenverteilungen für die verschiedenen Klassen geschätzt. In jedem Rückkopplungsschritt wird die diskriminative Bedingung aktualisiert, und zwar in einem zweischrittigen Verfahren. Im ersten Schritt wird die aktuelle Wahrscheinlichkeit des Erwartungswerts geschätzt unter Verwendung Gaußscher Verteilungen für die K Klassen:

$$p(X_k \mid Y) = \frac{p(X_k)p(Y \mid X_k)}{\sum_{k=1}^{K} p(Y \mid X_k)p(X_k)} \cdot$$

Im zweiten Schritt wird die resultierende Wahrscheinlichkeit des Erwartungswerts verwendet zur Aktualisierung der Mittelwerte der Klassen, jeweils berechnet aus den letzten N Vektoren $Y_i$ und ihrer Klassenbezeichnungen

$$\mu_k = \frac{1}{p(X_k)N} \sum_{i=1}^{N} p(X_k \mid Y_i)Y_i$$

Die Kovarianzmatrix C wird wie folgt aktualisiert:

$$C = \frac{1}{N-1} \sum_{k=1}^{K} \sum_{i=1}^{N} p(X_k \mid Y_i)(Y_i - \mu_k)((Y_i - \mu_k)^T$$

Für jeden weiteren Messdatensatz und seine geschätzten Wahrscheinlichkeiten wird der älteste der Lerndatensätze ersetzt, was einem mitbewegten Fenster entspricht, welches den Lerndatensatz für den Klassifizierer aktualisiert.

In einer weiteren erfindungsgemäßen Variante, bezeichnet als ALDEC, wird ein zusätzliches neuronales Signal ausgewertet, und zwar ein Fehlersignal E. Dieses Fehlersignal entspricht einem einer Gehimaktivität, die gemessen werden kann in dem Fall, dass die Aktion des Probanden nicht korrekt durch den Computer interpretiert wurde, also die vom Probanden intendierte Bewegung nicht mit der durch den Computer ermittelten und/oder durchgeführten Bewegung übereinstimmt.

Unter Einbeziehung des Fehlersignals E ergibt sich für die obigen Gleichungen folgendes:

$$p(X_k \mid Y, E) = \frac{p(X_k) p(Y, E \mid X_k)}{p(Y, E)}$$

und, sofern die Signale unabhängig voneinander sind:

$$p(X_k \mid Y, E) = \frac{p(X_k)}{p(Y, E)} p(Y \mid X_k) p(E \mid X_k).$$

Im idealen Fall, dass jeder Fehler detektiert wird, gilt für die Verteilung des Fehlersignals, das von der Klasse X_k und der geschätzten Klasse X_est abhängt,

$$p(E \mid X_k) = \begin{cases} 1 & \text{für} \quad X_k \neq X_{est} \\ 0 & \text{für} \quad X_k = X_{est} \end{cases}.$$

Differenzierter kann man die Verlässlichkeit R des Fehlersignals benutzen, die angibt, wie wahrscheinlich ein Fehlersignal gemessen wird, wenn dekodierte und wirkliche Klasse nicht übereinstimmen. Mit dieser Verlässlichkeit kann die aus dem Fehlersignal gewonnene Wahrscheinlichkeit gewichtet werden, bevor die durch die normale adaptive Methode berechnete Wahrscheinlichkeit mit dieser aktualisiert wird, und zwar nach der folgenden Berechnungsvorschrift

$$p_{total}(X_k \mid Y, E) = \frac{p_{error}(X_k \mid Y, E) p(X_k \mid Y, E)}{\sum_{k=1}^{K} p_{error}(X_k \mid Y, E) p(X_k \mid Y, E)}$$

Wenn mit einer Verlässlichkeit R kein Fehler detektiert wird und die detektierte Bewegung (Klasse) $X_k$ ist, dann "verteilt" sich die Wahrscheinlichkeit 1-R auf die anderen N X Bewegungen (Klassen) $X_{rest}$.

$$p_{error}(X_k \mid Y, E) = R, \qquad p_{error}(X_{Rest} \mid Y, E) = \frac{1-R}{nC-1}.$$

Wenn dagegen ein Fehler detektiert wird, ist die Wahrscheinlichkeit für diese Bewegung:

$$p_{error}(X_k \mid Y, E) = 1-R, \qquad p_{error}(X_{Rest} \mid Y, E) = \frac{R}{nC-1}$$

Im Folgenden sei der symmetrische Fall angenommen, dass diese Wahrscheinlichkeit gleich derjenigen ist, dass kein Fehler detektiert wird, wenn kein Fehler aufgetreten ist. Dann ist die Wahrscheinlichkeit, dass kein Klassifikationsfehler auftritt, gleich dem Dekodierungsvermögen DP. Hiermit ergeben sich die folgenden Wahrscheinlichkeiten:

|  | Fehler aufgetreten | Kein Fehler aufgetreten |
|---|---|---|
| Fehler detektiert | (1 - DP)R | DP(1 - R) |
| Kein Fehler detektiert | (1 - DP)(1 - R) | (1 - DP) R |

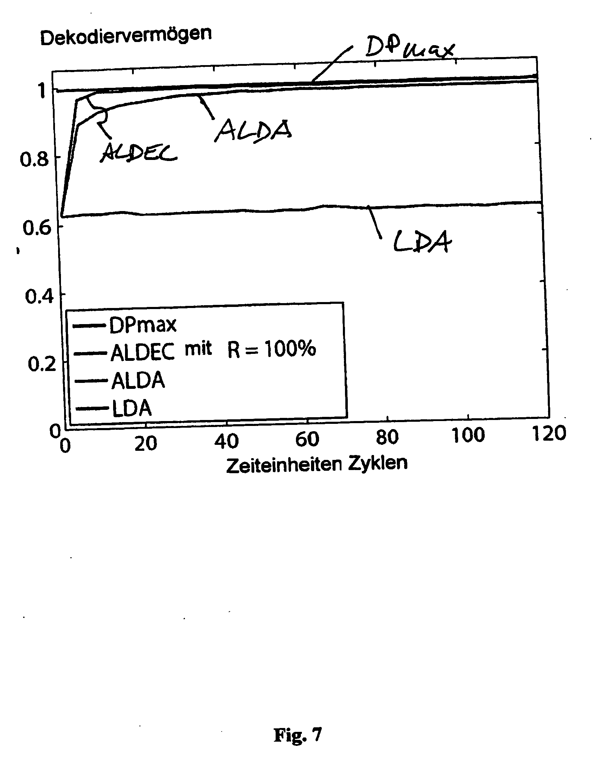

Fig. 7 stellt die Performance verschiedener der zuvor beschriebenen Verfahren einander gegenüber. Die Performance wurde anhand von Simulationen ermittelt. Zunächst, also vor dem Zeitpunkt der Aufzeichnung, wurde das Modell eingelernt. Anschließend wurden die Mittelwerte der Bewegungsverteilungen (Klassenverteilungen) gleichförmig verschoben, womit die in der Einleitung beschriebcne Dynamik der neuronalen Aktivität simuliert wird.

Während das Verfahren LDA gemäß Stand der Technik (also ohne Adaption) der Änderung in den anschließenden Lernzyklen praktisch nicht folgen kann, gelingt dies mit dem adaptiven Modell ALDA bereits nach wenigen Lernzyklen. Mit dem adaptiven Model ALDEC, welches das neuronale Fehlersignal (mit R=100%) ausnutzt, verläuft die Anpassung noch steiler und erreicht einen noch höheren Wert. Zum Vergleich ist das maximale Dekodiervermögen DPmax angegeben, das bei 1 liegt.

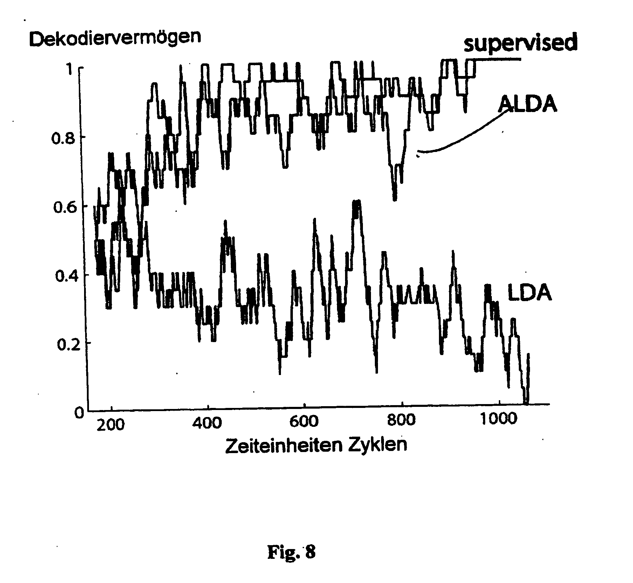

Fig. 8 stellt die Ergebnisse bei der Verarbeitung realer nicht-stationärer Daten dar. Die Daten stammen aus einem Datensatz, der mit einem BMI auf EEC-Basis gewonnen wurde. Die Daten betreffen zwei Bewegungen bzw. (Klassen), nämlich linke Hand, rechte Hand. Die ersten 200 Lernzyklen des Datensatzes wurden verwendet, um ein LDA-Modell (also ohne Adaption) einzulernen. Für die folgenden Lernzyklen wurden drei Modelle verglichen, und zwar LDA gemäß Stand der Technik, ALDA mit Aktualisierung nach jedem Lernschritt und überwachtes ALDA.

Die Kurven zeigen das Dekodiervermögen DP der einzelnen Verfahren in Abhängigkeit von der Zeit. Wie zu erkennen ist, verschlechtert sich das Dekodiervermögen des LDA-Verfahrens wiederum über die Zeit, während sich das ALDA-Verfahren an die Änderungen anpasst. Überwachtes ALDA, also Lernen mit manueller Korrektur des Modells erreicht natürlich die besten Werte für das Dekodiervermögen, vgl. die Kurve "supervised".

Anwendungsbeispiel Tastatursteuerung durch eine adaptive Klassifikation

Ein schwer gelähmter Patient, der seine Sprachmuskulatur nicht mehr nutzen kann, hat gelernt, eine patientengerechte Computertastatur über seine Hirnsignale anzusteuern: Eine auf der Hirnoberfläche implantierte dünne Folie mit Elektrodenkontakten misst die Nervenaktivität eines motorischen Areals. Die Elektroden übergeben die Spannungsunterschiede zwischen den einzelnen Elektroden und einer Referenzelektrode über ein drahtloses Übertragungssystem und einen Verstärker an ein Computersystem.

Dort werden die eingehenden Spannungsunterschiede in kurzen kontinuierlichen Zeitabständen vorverarbeitet und auf die informationstragenden Komponenten reduziert. Aus den Spannungsunterschieden mit hoher Zeitauflösung wird auf diese Weise ein zu klassifizierender Signalvektor Y. Durch Vergleich mit einem Referenz- oder Trainingsdatensatz $Y_{ref}$ ordnet der im Computersystem implementierte Klassifikator Y die wahrscheinlichste Taste X der Computertastatur zu. Ein schneller und gut funktionierender Klassifikator hierfür ist die Lineare Diskriminantenanalyse.

Der Referenzdatensatz wird anfänglich einmal durch vorgegebenes Auswählen aller Tasten $X_k$ gebildet: Die währenddessen aufgezeichneten Nervenaktivitäten $Y_{roh}$ werden so, richtig zugeordnet, mehrfach für jede Tastenwahl $X_k$ aufgezeichnet. Nach Bestimmung der informationstragenden Komponenten stehen diese Zuordnungspaare dem Klassifikator zur Verfügung. Im Falle der Linearen Diskriminantenanalyse in Form einer Gaußschen Verteilung der informationstragenden Komponenten für jede Taste. Die Gaußschen Verteilungen bilden hier das Vorhersagemodell.

Das Problem im laufenden Betrieb der Tastatursteuerung ist dabei das der Referenzdatensatz aufgrund der eingangs beschriebenen Dynamik der neuronalen Aktivität schnell seine Richtigkeit verliert - und damit das Vorhersagemodell schlechter und schlechter wird. Erfindungsgemäß wird dies durch die kontinuierliche Anpassung des Vorhersagemodells während des laufenden Betriebs verhindert. Die eingehenden zu klassifizierenden Signalvektoren modifizieren das Vorhersagemodell und halten es aktuell. Im Beispiel der Linearen Diskriminantenanalyse können die Gaußschen Verteilungen durch die Annahme dass der eingehende Signalvektor die möglichen Tasten bestmöglich darstellt angepasst werden: Mittelwert $\mu$ und Kovarianz C der Verteilung für jede Taste werden in Richtung des neu eingegangenen Signalvektors Y verschoben, und zwar in der Stärke proportional dazu, wie wahrscheinlich ihre Taste für Y dem bisherigen Vorhersagemodell nach ist. Entsprechend unserer Schemata entspricht dies einem adaptiven System nach Fig. 1c. Das dieser Ansatz funktioniert, zeigen Fig. 7 und 8 (hierbei ist ALDA noch besser als LDA).

Ein Nachteil dieser Form der "unsupervised" Anpassung, ist das auch falsch klassifizierte Signalvektoren das Vorhersagemodell in ihre Richtung hin verschieben. Eine optimierte Anpassung nutzt daher, wenn irgend möglich, ein Signal, das angibt, ob die letzte Klassifizierung richtig - d. h. die vom Patienten gewünschte Taste wurde ausgewählt- oder falsch war. Eine Möglichkeit, solch ein Signal zu messen, ist zusätzlich zu Y die Nervenaktivitäten eines Gehirnareals zu messen, in dem Korrelate für ein neuronales Fehlersignal vorhanden sind. Genau wie für den Signalvektor Y werden diese zu einem Verstärker an ein Computersystem übertragen, die informationstragenden Komponenten extrahiert und ein Fehlersignal E erzeugt. Dieses kann dann verwendet werden, um die Anpassung des Vorhersagemodells bei falsch klassifizierten Vektoren zu verhindern, oder wenn, dann, um dies in die umgekehrte Richtung hin anzupassen. Dies entspricht einem adaptiven System nach Fig. 3. Dass dieser Ansatz noch besser funktioniert als ALDA, zeigt Fig. 7.

**Patentansprüche**

1. Verfahren zur rechnergestützten Vorhersage von intendierten Bewegungen (X) aus neuronalen Signalen (Y) des Gehirns eines Probanden, wobei die neuronalen Signale (Y) jeweils mit intendierten Bewegungen (X) im Gehirn assoziiert sind,
   wobei auf Basis erfasster neuronaler Signale (Y) die wahrscheinlichsten Bewegungen (X) ermittelt werden,
   und zwar unter Verwendung zumindest eines Modells, wobei das zumindest eine Modell eine Abbildung (H) neuronaler Signale (Y) auf die möglichen intendierten Bewegungen (X) beschreibt, wobei das Verfahren aufweist:

   einen Schritt, in dem das zumindest eine Modell aktualisiert wird, wobei die Aktualisierung unter Verwendung der erfassten neuronalen Signale (Y) und ohne Kenntnis der intendierten Bewegung erfolgt,
   einen Schritt des Berechnens der aktuell wahrscheinlichsten Bewegung (X) mit dem zumindest einen aktualisierten Modell;

   **dadurch gekennzeichnet, dass** in die Berechnung der aktuellen Wahrscheinlichkeiten im ersten Schritt eine Adaption (W) des neuronalen Signals (Y) eingeht, wobei die Adaption (W) ein erfasstes neuronales Fehlersignal (E) des Gehirns berücksichtigt, welches im Gehirn des Probanden ausgelöst wird, wenn die ermittelte Bewegung (X) nicht mit der intendierten Bewegung übereinstimmt; und
   dass zusätzlich mindestens ein Modell (G) verwendet wird, das die Wahrscheinlichkeit der Bewegungen (p(X|Z)) in Abhängigkeit von Zuständen (Z) des Probanden beschreibt, wobei Zustände insbesondere Körperhaltung oder Aufmerksamkeit sind und wobei zusätzlich mindestens ein Modell (J) verwendet wird, das die Wahrscheinlichkeit der Bewegungen (p(X|O)) in Abhängigkeit der örtlichen Gegebenheiten (O) beschreibt, wobei örtliche Gegebenheiten insbesondere die Position des Probanden im Raum und die Gegenstände und Personen in der Umgebung des Probanden betreffen.

2. Verfahren gemäß Anspruch 1, wobei die Abbildung (H) in Abhängigkeit von der Zeit (t) zusätzlich durch ein erfasstes neuronales Fehlersignal (E) aktualisiert wird.

3. Verfahren gemäß Anspruch 1 oder 2, wobei die Abbildung (H) in Abhängigkeit von der Zeit (t) zusätzlich zu den neuronalen Signalen (Y) von Zuständen (Z) des Probanden abhängt, wobei Zustände insbesondere Körperhaltung oder Aufmerksamkeit sind.

4. Verfahren gemäß einem der vorherigen Ansprüche, wobei die Abbildung (H) die Wahrscheinlichkeit neuronaler Signale (Y) für die möglichen intendierten Bewegungen (X) beschreibt und wobei in das zumindest eine Modell eine Adaption (W) des neuronalen Signals (Y) eingeht, die vor dem Aktualisierungsschritt umfasst:

   einen Schritt, in dem die aktuellen Wahrscheinlichkeiten (p(X|Y)), mit welchen ein aktuell erfasstes neuronales Signal (Y) den jeweiligen möglichen Bewegungen (X) entspricht, geschätzt werden.

5. Verfahren gemäß einem der vorherigen Ansprüche, wobei das zumindest eine Modell (H) jeweils durch zumindest einen Kennwert bestimmt wird und im Aktualisierungsschritt der zumindest eine Kennwert des zumindest einen Modells aktualisiert wird.

6. Verfahren gemäß Anspruch 5, wobei das zumindest eine Modell (H) ein adaptives Modell (p(Y|X)) Gauß-verteilter Wahrscheinlichkeiten für eine vorbestimmte Anzahl, K, von Klassen von Bewegungen (X) ist, wobei das zumindest eine Modell als zumindest einen Kennwert den Mittelwert ($mu\_k$) mit k={1,..,K} sowie die Kovarianzmatrix ($C\_k$) der Gaußverteilung umfasst und wobei im zweiten Schritt jeweils der Mittelwert ($mu\_k$) der vorbestimmten Klassen von Bewegung ($X\_1$, ..., $X\_K$) aktualisiert wird unter Verwendung einer vorbestimmten Anzahl (N) erfasster Signale (Y), und die Kovarianzmatrix (C) unter Verwendung einer vorbestimmten Anzahl (N) erfasster Signale (Y) und der aktualisierten Mittelwerte aktualisiert wird.

**7.** Verfahren gemäß Anspruch 6, wobei das zumindest eine Modell ein adaptives Modell (p(Y|X)) mit einer Funktion (H) der intendierten Bewegung (X) zuzüglich eines Rauschanteils (Ny) ist, wobei der zumindest eine Kennwert Koeffizienten (h1, h2,..., hn) der Funktion (H) umfasst und wobei im zweiten Schritt jeweils die Koeffizienten aktualisiert werden unter Verwendung einer vorbestimmten Anzahl (N) erfasster Signale (Y).

**8.** Verfahren gemäß Anspruch 5 oder 7, wobei zusätzlich ein Modell (F) für die Bewegung angenommen wird, bei welchem die Vorhersage zu vorbestimmten Zeitpunkten (..., t-1, t, t+1, ...) erfolgt und gemäß dem zusätzlichen Modell (F) ein erfasstes neuronales Signal (Y) zu einem vorbestimmten Zeitpunkt (t) als eine vorbestimmte Funktion (H) einer Bewegung (X) zu dem Zeitpunkt (t) sowie einem ersten Rauschanteil (Ny) dargestellt wird und wobei die Bewegung (X) zu dem vorbestimmten Zeitpunkt (t) als Funktion (F) einer Bewegung zu einem früheren Zeitpunkt (t-1) und einem zweiten Rauschanteil (Nx) dargestellt wird.

**9.** Verfahren gemäß Anspruch 6, wobei für jede der Wahrscheinlichkeiten ($p(X_k|Y)$) gilt:

$$p(X_k \mid Y) = \frac{p(X_k)p(Y \mid X_k)}{\sum_{k=1}^{K} p(Y \mid X_k)p(X_k)}$$

wobei k den Index der Klasse bezeichnet,
für die Mittelwerte gilt:

$$\mu_k = \frac{1}{p(X_k)N} \sum_{i=1}^{N} p(X_k \mid Y_i)Y_i$$

und für die Kovarianz gilt:

$$C = \frac{1}{N-1} \sum_{k=1}^{K} \sum_{i=1}^{N} p(X_k \mid Y_i)(Y_i - \mu_k)((Y_i - \mu_k)^T$$

**10.** Verfahren gemäß Anspruch 4, wobei für mindestens eine der Wahrscheinlichkeiten gilt:

$$p(X_k \mid Y, E) = \frac{p(X_k)p(Y, E \mid X_k)}{p(Y, E)},$$

und wobei bei einem Fehlersignal (E), das unabhängig vom neuronalen Signal (Y) ist, gilt

$$p(X_k \mid Y, E) = \frac{p(X_k)p(Y \mid E_k)}{p(Y, E)} p(E \mid X_k)$$

**11.** Verfahren gemäß einem der vorherigen Ansprüche, wobei die Signale (Y, E) über ein Brain-Machine-Interface zum Errechnen der Bewegungen (X) weiterverarbeitet werden.

**12.** Verfahren zum rechnergestützten Ansteuern eines Aktuators, eine von einem Probanden intendierte Bewegung (X) auszuführen, wobei die auszuführende Bewegung (X) auf der Basis von erfassten neuronalen Signalen (Y) des Probanden ermittelt wird durch das Verfahren gemäß einem der vorherigen Ansprüche, wobei der Aktuator insbesondere eine Prothese oder ein Computer-Eingabegerät ist.

**13.** Vorrichtung zum rechnergestützten Ansteuern eines Aktuators, eine von einem Probanden intendierte Bewegung (X) auszuführen, aufweisend:

ein Rechnersystem zum Verarbeiten von erfassten neuronalen Signalen (Y), wobei das Rechnersystem die auszuführende Bewegung (X) auf der Basis von erfassten neuronalen Signalen (Y) des Probanden ermittelt durch Anwendung des Verfahrens gemäß einem der vorherigen Ansprüche.

**Claims**

1. Process for the computerized prevision of intended movements (X) from neuronal signals (Y) of a proband's brain, wherein the neuronal signals (Y) are associated each time with intended movements (X) in the brain, wherein the most likely movements (X) are determined based on detected neuronal signals (Y), namely using at least one model, wherein the at least one model describes a mapping (H) of neuronal signals (Y) on the possible intended movements (X), wherein the process comprises:

   a step in which the at least one model is updated, wherein the update takes place using the detected neuronal signals (Y) and without knowledge of the intended movement, a step of the calculation of the currently most likely movement X with the at least one updated model;

   **characterized in that**

   an adaptation (W) of the neuronal signal (Y) enters into the calculation of the current probabilities in the first step, wherein the adaptation (W) considers a detected neuronal error signal (E) of the brain, which is generated in the brain of the proband, if the determined movement (X) does not coincide with the intended movement; that additionally at least one model (G) is used which describes the probability of the movements (p(X|Z)) depending on proband's states (Z), in which states are especially posture or attention; and additionally at least one model (J) is used which describes the probability of the movements (p(X|O)) depending on the local conditions (O), wherein local conditions especially concern the proband's position in the room and the subject matters and persons in the proband's environment.

2. Process according to claim 1, wherein the mapping (H) depending on the time (t) is updated additionally by a detected neuronal error signal (E).

3. Process according to claim 1 or 2, wherein the mapping (H) depending on the time (t) in addition to the neuronal signals (Y) depends on states (Z) of the proband, wherein states are especially posture or attention.

4. Process according to one of the preceding claims, wherein the mapping (H) describes the probability of neuronal signals (Y) for the possible intended movements (X) and wherein an adaptation (W) of the neuronal signal (Y) is included in the at least one model, which before the updating step comprises the following:

   a step in which the current probabilities (p(X|Y)), with which a currently detected neuronal signal (Y) corresponds to the respective possible movements (X), are estimated.

5. Process according to one of the preceding claims, wherein the at least one model (H) is determined each time by at least one characteristic and the at least one characteristic of the at least one model is updated in the updating step.

6. Process according to claim 5, wherein the at least one model (H) is an adaptive model (p(Y|X)) of Gauss distributed probabilities for a predetermined number, K, of classes of movements (X), wherein the at least one model comprises the average (mu_k) with k={1,...,K} as well as the covariance matrix (C_k) of the Gauss distribution as at least one characteristic, and in wherein the average (mu_k) of the predetermined classes of movement (X_1, ..., X_k) is updated each time in the second step using a predetermined number (N) of detected signals (Y), and the covariance matrix (C) is updated using a predetermined number (N) of detected signals (Y) and of the updated average.

7. Process according to claim 6, wherein the at least one model is an adaptive model (p(Y|X)) with a function (H) of the intended movement (X) plus a noise component (Ny), wherein the at least one characteristic (h1, h2,..., hn) comprises coefficients of the function (H), and wherein the coefficients are updated each time in the second step using a predetermined number (N) of detected signals (Y).

8. Process according to claim 5 or 7, wherein a model (F) for the movement is additionally assumed, in which the prevision takes place at predetermined moments (..., t-1, T, t+1, ...) and, according to the additional model (F), a detected neuronal signal (Y) is represented at a predetermined time (t) as a predetermined function (H) of a movement (X) at the moment (t) as well as a first noise component (Ny), and wherein the movement (X) is represented at the predetermined moment (t) as a function (F) of a movement at an earlier moment (t-1) as well as a second noise component (Nx).

**9.** Process according to claim 6, wherein the following applies for each of the probabilities $(p(X_k|Y))$:

$$p(X_k \mid Y) = \frac{p(X_k)p(Y \mid X_k)}{\sum_{k=1}^{K} p(Y \mid X_k)p(X_k)}$$

wherein k indicates the index of the class, for the averages the following applies:

$$\mu_k = \frac{1}{p(X_k)N} \sum_{i=1}^{N} p(X_k \mid Y_i)Y_i$$

and the following applies for the covariance:

$$C = \frac{1}{N-1} \sum_{k=1}^{K} \sum_{i=1}^{N} p(X_k \mid Y_i)(Y_i - \mu_k)((Y_i - \mu_k)^T$$

**10.** Process according to claim 4, wherein the following applies for at least one of the probabilities:

$$p(X_k \mid Y, E) = \frac{p(X_k)p(Y, E \mid X_k)}{p(Y, E)},$$

and wherein in the case of an error signal (E) which is independent of the neuronal signal (Y) the following applies:

$$p(X_k \mid Y, E) = \frac{p(X_k)p(Y \mid E_k)}{p(Y, E)} p(E \mid X_k)$$

**11.** Process according to one of the preceding claims, wherein the signals (Y, E) are further processed by a Brain Machine Interface for the calculation of the movements (X).

**12.** Process for the computerized control of an actuator, in order to execute a movement intended by a proband (X), wherein the movement to be performed (X) is determined on the basis of detected neuronal signals (Y) of the proband by the process according to one of the preceding claims.

**13.** Apparatus for computerized control of an actuator in order to execute a movement intended by a proband (X), comprising:

    a computer system for processing detected neuronal signals (Y), wherein the computer system determines the movement to be performed (X) on the basis of detected neuronal signals (Y) of the proband by application of the process according to one of the preceding claims.

**Revendications**

**1.** Procédé de prédiction assistée par ordinateur, de mouvements intentionnels (X) à partir de signaux neuronaux (Y) du cerveau d'un sujet, les signaux neuronaux (Y) étant associés chacun à des mouvements intentionnels (X) dans le cerveau,

dans lequel les mouvements (X) les plus probables sont déterminés sur la base de signaux neuronaux (Y) acquis, à savoir en utilisant au moins un modèle, ledit au moins un modèle décrivant une représentation (H) de signaux neuronaux (Y) sur les mouvements intentionnels (X) possibles, ledit procédé comprenant :

une étape dans laquelle ledit au moins un modèle est actualisé, l'actualisation se faisant en utilisant les signaux neuronaux (Y) acquis et sans avoir connaissance du mouvement intentionnel,
une étape de calcul du mouvement (X) actuellement le plus probable, à l'aide dudit au moins un modèle actualisé ;

**caractérisé par le fait que**, dans un premier temps, une adaptation (W) du signal neuronal (Y) intervient dans le calcul des probabilités actuelles, ladite adaptation (W) prenant en compte un signal d'erreur neuronal (E) acquis du cerveau, qui est déclenché dans le cerveau du sujet lorsque le mouvement (X) déterminé et le mouvement intentionnel ne concordent pas ; et
que, en sus, au moins un modèle (G) est mis en oeuvre qui décrit la probabilité des mouvements (p(X|Z)) en fonction d'états (Z) du sujet, des états étant en particulier la posture ou l'attention, et dans lequel, en sus, au moins un modèle (J) est mis en oeuvre qui décrit la probabilité des mouvements (p(X|O)) en fonction des conditions locales (O), des conditions locales concernant en particulier la position du sujet dans l'espace ainsi que les objets et personnes dans l'environnement du sujet.

2. Procédé selon la revendication 1, dans lequel la représentation (H) en fonction du temps (t) est actualisée en sus par un signal d'erreur neuronal (E) acquis.

3. Procédé selon la revendication 1 ou 2, dans lequel la représentation (H) en fonction du temps (t) dépend, en plus des signaux neuronaux (Y), d'états (Z) du sujet, des états étant en particulier la posture ou l'attention.

4. Procédé selon l'une quelconque des revendications précédentes, dans lequel la représentation (H) décrit la probabilité de signaux neuronaux (Y) pour les mouvements intentionnels (X) possibles et dans ledit au moins un modèle intervient une adaptation (W) du signal neuronal (Y), qui comprend avant ladite étape d'actualisation :

une étape dans laquelle on estime les probabilités actuelles (p(X|Y)) avec lesquelles un signal neuronal (Y) actuellement acquis correspond aux mouvements possibles respectifs (X).

5. Procédé selon l'une quelconque des revendications précédentes, dans lequel ledit au moins un modèle (H) est déterminé respectivement par au moins une valeur caractéristique et ladite au moins une valeur caractéristique dudit au moins un modèle est actualisée dans l'étape d'actualisation.

6. Procédé selon la revendication 5, dans lequel ledit au moins un modèle (H) est un modèle adaptatif (p(Y|X) de probabilités distribuées de façon gaussienne pour un nombre prédéterminé, K, de classes de mouvements (X), dans lequel ledit au moins un modèle comprend, en tant qu'au moins une valeur caractéristique, la moyenne (mu_k), avec k = {1,..,K}, ainsi que la matrice de covariance (C_k) de la distribution gaussienne, et dans lequel, dans un second temps, respectivement, la moyenne (mu_k) des classes prédéterminées de mouvement (X_1, ..., X_K) est actualisée en utilisant un nombre prédéterminé (N) de signaux acquis (Y) et la matrice de covariance (C) est actualisée en utilisant un nombre prédéterminé (N) de signaux acquis (Y) et les moyennes actualisées.

7. Procédé selon la revendication 6, dans lequel ledit au moins un modèle est un modèle adaptatif (p(Y|X)) avec une fonction (H) du mouvement intentionnel (X) plus une composante de bruit (Ny), ladite au moins une valeur caractéristique comprenant des coefficients (hl, h2,..., hn) de la fonction (H), et dans lequel, dans un second temps, respectivement, les coefficients sont actualisés en utilisant un nombre prédéterminé (N) de signaux acquis (Y).

8. Procédé selon la revendication 5 ou 7, dans lequel on prend en sus un modèle (F) pour le mouvement, dans le cas duquel la prédiction se fait à des moments prédéterminés (..., t-1, t, t+1, ...), et, selon ledit modèle (F) supplémentaire, un signal neuronal acquis (Y) à un moment prédéterminé (t) est représenté en tant qu'une fonction prédéterminée (H) d'un mouvement (X) audit moment (t) et une première composante de bruit (Ny) et dans lequel le mouvement (X) audit moment prédéterminé (t) est représenté en tant que fonction (F) d'un mouvement à un moment antérieur (t-1) et une deuxième composante de bruit (Nx).

9. Procédé selon la revendication 6, dans lequel pour chacune des probabilités (p($X_k$|Y)) vaut:

$$p(X_k \mid Y) = \frac{p(X_k)p(Y \mid X_k)}{\sum_{k=1}^{K} p(Y \mid X_k)p(X_k)}$$

où k désigne l'indice de la classe,
pour les moyennes vaut :

$$\mu_k = \frac{1}{p(X_k)N} \sum_{i=1}^{N} p(X_k \mid Y_i)Y_i$$

et pour la covariance vaut :

$$C = \frac{1}{N-1} \sum_{k=1}^{K} \sum_{i=1}^{N} p(X_k \mid Y_i)(Y_i - \mu_k)((Y_i - \mu_k)^T$$

**10.** Procédé selon la revendication 4, dans lequel pour l'une au moins des probabilités vaut :

$$p(X_k \mid Y, E) = \frac{p(X_k)p(Y, E \mid X_k)}{p(Y, E)},$$

et dans lequel, dans le cas d'un signal d'erreur (E) qui est indépendant du signal neuronal (Y), vaut

$$p(X_k \mid Y, E) = \frac{p(X_k)p(Y \mid E_k)}{p(Y, E)} p(E \mid X_k)$$

**11.** Procédé selon l'une quelconque des revendications précédentes, dans lequel les signaux (Y, E) sont traités ultérieurement par une interface cerveau-machine pour calculer les mouvements (X).

**12.** Procédé de commande assistée par ordinateur, d'un actionneur pour qu'il effectue un mouvement (X) qu'un sujet entend effectuer, le mouvement (X) à effectuer étant déterminé sur la base de signaux neuronaux acquis (Y) du sujet, par le procédé selon l'une quelconque des revendications précédentes, ledit actionneur étant en particulier une prothèse ou un dispositif d'introduction d'un ordinateur.

**13.** Dispositif de commande assistée par ordinateur, d'un actionneur pour qu'il effectue un mouvement (X) qu'un sujet entend effectuer, comprenant :

un système informatique de traitement de signaux neuronaux (Y) acquis, ledit système informatique déterminant le mouvement à effectuer (X) sur la base de signaux neuronaux acquis (Y) du sujet, en appliquant le procédé selon l'une quelconque des revendications précédentes.

Neuronales Eingangsignal
**Y(t)**

Neuronales Eingangsignal
**Y(t)**

Neuronales Eingangsignal
**Y(t)**

| Neuronales Modell
**p(X|Y)**
- konstant - |

| Neuronales Modell
**p(X|Y)(t-1)** | → | aktualisiertes
neuronales Modell
**p(X|Y)(t)** |

| Neuronales Modell
**p(X|Y)(t-1)** | ← | aktualisiertes
neuronales Modell
**p(X|Y)(t)** |

Bewegungsausgangssignal
**X(t)**

Bewegungsausgangssignal
**X(t)**

Bewegungsausgangssignal
**X(t)**

SdT

a)

b)

c)

**Fig. 1**

EP 2 165 296 B1

Neuronales
Eingangssignal
$Y(t)$

Allgemeines
Zustandsmodell
$p(X|Z)$

Neuronales Modell
$p(X|Y)$

Aktualisiertes
neuronales Modell
$p(X|Y)(t)$

Bewegungsmodell
$p(X_t|X_{t-1})$

Bewegungsausgangssignal
$X(t)$

Fig. 2

21

**Y(t)**　　　　　　**E(t)**

Neuronales Modell　　　aktualisiertes
　　　　　　　　　　　neuronales Modell
**p(X|Y)(t-1)**　　　　**p(X|Y)(t)**

wenn X(t) von der
intendierten
Bewegung abweicht

**X(t)**

**Fig. 3**

Y(t)          E(t)

wenn X(t)
von der
intendierten
Bewegung
abweicht

| Zustandsmodell |
| p(X\|Z) |

| Neuronales Modell | aktualisiertes neuronales Modell | Bewegungsmodell |
| p(X\|Y)(t-1) | p(X\|Y)(t) | p(X$_t$\|X$_{t-1}$) |

X(t)

**Fig. 4a**

**Fig. 4b**

Fig. 5

**Fig. 6**

Fig. 7

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040073414 A1

**In der Beschreibung aufgeführte Nicht-Patentliteratur**

- **PARA et al.** Response error correction - a demonstration of improved human-machine performance using real-time EEG monitoring. *IEEE transactions on neural systems and rehabilitation engineering, IEEE service centre, New York,* 01. Juni 2003, vol. 11 (2), 173-177

- **SIMON HAYKIN.** Kalman Filtering and Neural Networks. John Wiley & Sons, 2001